# EUROPÄISCHE PATENTSCHRIFT

(11) **EP 1 152 267 B1**
(45) Veröffentlichungstag und Bekanntmachung des Hinweises auf die Patenterteilung: **29.06.2011**
(21) Anmeldenummer: 01107818.5
(22) Anmeldetag: 06.04.2001
(51) Int. Cl.: G02B 6/125

(54) **Optische Wellenleiterstruktur und zugehöriges Herstellungsverfahren**
Optical waveguide structure and manufacturing method
Structure à guides optiques et procédé de fabrication

(30) Priorität: 13.04.2000 DE 10018283
(43) Veröffentlichungstag der Anmeldung: 07.11.2001
(73) Patentinhaber: Alcatel Lucent, 75008 Paris (FR); Alcatel SEL Aktiengesellschaft, 70435 Stuttgart (DE)
(72) Erfinder: Kowatsch, Martin, Dipl.-Ing.(FH), 74392 Freudental (DE)
(74) Vertreter: Schmidt, Werner Karl

(56) Entgegenhaltungen:
- DE-A- 4 217 553
- FR-A- 2 479 993
- US-A- 3 860 405
- US-A- 4 472 020
- US-A- 4 878 728
- US-A- 5 521 992
- US-A- 5 526 454
- US-A- 5 555 127
- GRIMES G J ET AL: "PACKAGING OF OPTOELECTRONICS AND PASSIVE OPTICS IN A HIGH CAPACITY TRANSMISSION TERMINAL" PROCEEDINGS OF THE ELECTRONIC COMPONENTS AND TECHNOLOGY CONFERENCE. ORLANDO, JUNE 1 - 4, 1993, NEW YORK, IEEE, US, Bd. CONF. 43, 1. Juni 1993 (1993-06-01), Seiten 718-724, XP000380070 ISSN: 0569-5503

## Beschreibung

Die vorliegende Erfindung betrifft eine auf einer Platine ausgebildete optische Wellenleiterstruktur, die Leitungen, Verzweigungen und/oder Verbindungen umfasst. Die Wellenleiterstruktur weist sowohl planare Wellenleiter, die aus einem Wellenleitermaterial bestehen, das in Gräben eingebracht ist, die in einem Trägermaterial ausgebildet sind, wobei das Wellenleitermaterial einen höheren Brechungsindex als das die Gräben begrenzende Material hat, als auch Glas- und/oder Kunststofffasern auf.

Die Erfindung betrifft außerdem eine mehrlagige optoelektrische Leiterplatte. Schließlich betrifft die vorliegende Erfindung auch ein Verfahren zur Herstellung einer auf einer Platine ausgebildeten optischen Wellenleiterstruktur, die Leitungen, Verzweigungen und/oder Verbindungen umfasst. Dabei werden in ein Trägermaterial dem Verlauf der Wellenleiterstruktur entsprechende Gräben eingebracht, in einem Teil der Gräben Glas- und/oder Kunststofffasern angeordnet und wird in den restlichen Gräben dann ein Wellenleitermaterial eingebracht. Das Wellenleitermaterial weist einen höheren Brechungsindex als das die Gräben begrenzende Material auf.

In den letzten Jahren hat sich gezeigt, dass die Taktfrequenzen von Mikroprozessoren stetig ansteigen. Inzwischen haben die Taktfrequenzen die 1-GHz-Marke überschritten und in den nächsten Jahren ist mit einem weiteren Anstieg der Taktfrequenz auf 5 bis 10 GHz zu rechnen. Der Systemtakt auf Platinen, bspw. einer Systemplatine (sog. Motherboard) eines Rechners, hinkt dem Takt der Mikroprozessoren um Größenordnungen hinterher. Die interne Taktrate der einzelnen Halbleiterbauelemente (sog. Chips) ist zwar bedeutend höher als der Systemtakt auf den Platinen. Die Taktrate wird aber durch die derzeitige Anschluss- und Verbindungstechnik mittels kupferner Leiterbahnen begrenzt. Insbesondere bremsen in den herkömmlichen elektronischen Baugruppen die parasitären Induktivitäten und Kapazitäten der kupfernen Leiterbahnzüge die Geschwindigkeit, mit der die Chips intern die Daten verarbeiten können. Schaltungstechnisch wird es mit kupfernen Leiterbahnen immer schwieriger, das Übersprechen durch die Abstrahlung von hochfrequenten Signalen von den wie Antennen wirkenden Leiterbahnen in den Griff zu bekommen; Dämpfungsverluste verschmieren die rechteckigen Pulsformen und erschweren die Detektion am anderen Ende der Verbindungsleitung. Die Herstellung einer Platine, die mit einer Taktrate von 4 bis 8 GHz noch problemlos arbeitet, wird - wenn überhaupt - erst in mehreren Jahren und nur mit einem sehr großen Aufwand möglich sein.

Eine Möglichkeit zur Erhöhung des Systemtaktes auf den Platinen wäre, die Busbreite zu vergrößern und durch eine höhere Parallelität dieselbe Datenmenge mit einer geringeren Geschwindigkeit auf den einzelnen Leitungen zu übertragen. Das würde jedoch nicht nur zu einer Vervielfachung der Zahl der Leiterbahnen, die auf den Platinen schon jetzt kaum unterzubringen sind, sondern auch zu einer Erhöhung der Zahl der I/O-Anschlüsse auf den Chips führen. Die Möglichkeiten zur Steigerung der Anschlussdichte, die der Übergang von der randzur flächenhaften Kontaktierung bietet, werden jedoch bald an ihre Grenze stoßen. Die Alternative, nämlich die Zahl der Anschlusspins durch eine höhere Datenrate pro Pin wieder zu verringern, lässt sich nur durch eine neue Technologie in der Verbindungstechnik bewerkstelligen.

Vor diesem Hintergrund verfolgen mehrere Firmen und Forschungsinstitute einen Lösungsansatz, der die Datenübertragung über planare Lichtwellenleiter zum Ziel hat, die in konventionelle Leiterplatten integriert werden. Optische Verbindungen sind unempfindlich gegen hochfrequente und elektrostatische Felder; sie überwinden die Probleme der elektrischen Leitungsdämpfung bei hohen Frequenzen, des Übersprechens und der elektromagnetischen Verträglichkeit (EMV)-Inkompatibilitäten. Zudem sind mit optischen Verbindungen Datenraten von 10 Gbit/s und mehr möglich.

Im Rahmen des vom Bundesforschungsministerium geförderten Vorhabens "Electrical Optical Cirquit Board" (EOCB) ist am Fraunhofer Institut für Zuverlässigkeit und Mikrointegration (IZM) Berlin ein Verfahren zur Vernetzung von Sender und Empfänger mittels Lichtwellenleiter auf einer optoelektrischen Leiterplatte entwickelt worden, das es erlaubt, eine der Metallisierungsebenen einer konventionellen mehrlagigen elektrischen Leiterplatte durch eine optische Wellenleiterstruktur zu ersetzen. Dazu werden die Wellenleiter, die einen typischen Querschnitt von 60 Mikrometer x 60 Mikrometer haben, zunächst in einem organischen Folienmaterial mit einem Prägestempel heißgeprägt. Anschließend werden die Gräben mit einem Wellenleitermaterial verfüllt, das einen leicht höheren Brechungsindex als das Folienmaterial aufweist, und dann mit einer zweiten Folie bedeckt. Diese Wellenleiterstruktur kann dann in eine Leiterplatte eingebaut werden. Die Abstände der Lichtleiter zueinander betragen etwa 250 Mikrometer.

Die nach dem oben beschriebenen Verfahren herstellten planaren Wellenleiter haben jedoch den Nachteil, dass die optische Dämpfung der Wellenleiter für eine Wellenlänge von 850 nm im Bereich von 0,2 bis 0,5 dB/cm liegt. Für die in der Nachrichtentechnik üblichen Wellenlängen im Bereich von 1300 bis 1550 nm ist die Dämpfung sogar noch höher. Der Grund für diese Dämpfung ist vor allem in der Absorption des Wellenleitermaterials, den Streuverlusten durch Verunreinigungen in dem Wellenleitermaterial sowie der Rauhigkeit des Grenzübergangs zwischen Kern und Mantel des Wellenleiters zu suchen. Für die Herstellung einer optoelektrischen Leiterplatte für sog. Backplane-Anwendungen müssen Entfernungen von über 50 cm überbrückt werden. Bei einer Wellenleiterdämpfung von 0,2 dB/cm beträgt dann die Gesamtdämpfung des Wellenleiters über 10 dB zzgl. der Verluste durch Ankopplung an die optischen Bauelemente. Für Applikationen mit Parallel-Optical-Link (POL) Modulen wäre die verfügbare Leistung damit bereits überschritten.

Ein weiterer Nachteil der planaren Wellenleiter ergibt sich in einer zusätzlichen Dämpfung im Bereich von Kreuzungen. Kreuzungen sind bei reinen Verteilaufgaben und bei komplexeren Anwendungen notwendig. Die Unterbrechung des Wellenleitermantels an einer Kreuzung führt zu einer divergenten Strahlführung, wodurch ein Teil des Lichts von einem ersten Wellenleiter in einen den ersten Wellenleiter kreuzenden zweiten Wellenleiter gelangt und dort in den Mantel gelangt, d. h. absorbiert wird. Außerdem wird an den Kanten des Wellenleiters im Bereich einer Kreuzung Licht gestreut, wodurch ein Teil des Lichts aus dem ersten Wellenleiter in den kreuzenden zweiten Wellenleiter gelangt und dort weitergeführt wird. Dies führt zu einem Übersprechen von dem ersten Wellenleiter auf den zweiten Wellenleiter. Wenn mehrere Wellenleiter einen ersten Wellenleiter kreuzen, addiert sich das Übersprechen und das Signal-/Rauschverhältnis an dem optischen Empfänger am Ende des ersten Wellenleiters wird reduziert.

Aus dem Stand der Technik ist es des weiteren bekannt, eine optische Wellenleiterstruktur aus Glas- und/oder Kunststofffasern mittels einer sog. optischen Multiwire-Technologie herzustellen. Bei dem Multiwire-Verfahren werden Glas- oder Kunststofffasern auf einem Trägermaterial verlegt. Im Bereich von Kreuzungen der Lichtwellenleiterstruktur verlaufen die Glas- und/oder Kunststofffasern übereinander, so dass Licht aus dem einen Lichtwellenleiter nicht in den überkreuzenden Lichtwellenleiter einstreuen kann. Zudem ist die optische Dämpfung von Glas- und Kunststofffasern sehr gering.

Das optische Multiwire-Verfahren hat jedoch den Nachteil, dass damit keine Lichtwellenleiterstrukturen mit Verzweigungen und Verbindungen herstellt werden können.

Aus einem Artikel "Mikrostrukturen für die optische Kommunikation" von Prof. Dr. Andreas Neyer, der in der Zeitschrift Funkschau 24 (1999), S. 76 bis 78 erschienen ist, ist ein sog. SIGA (Silizium-Mikrostruktur, Galvanik, Abformung)-Verfahren zur Herstellung einer optischen Wellenleiterstruktur der eingangs genannten Art bekannt. Das SIGA-Verfahren wurde insbesondere für solche optischen Wellenleiterstrukturen entwickelt, die sowohl planare Wellenleiter als auch Glas- und/oder Kunststofffasern umfassen, und wo es auf eine hochgenaue Ausrichtung des Kerns der optischen Faser und des Kerns des Wellenleiters ankommt. Die Frage, wo innerhalb einer solchen Wellenleiterstruktur planare Wellenleiter und wo Glas- und/oder Kunststofffasern eingesetzt werden sollen, wird in diesem Artikel jedoch weder angesprochen noch können diesem Artikel irgendwelche Hinweise auf diese Frage entnommen werden.

Aus der US 5,526,454 ist eine Wellenleiterstruktur mit Leitungen, Verzweigungen und/oder Verbindungen bekannt. Auf die Ausgestaltung der Wellenleiterstruktur im Bereich von Kreuzungen geht diese Druckschrift allerdings überhaupt nicht ein.

Aus der US 3,860,405 ist eine integrierte optische Schaltung bekannt, bei der optische Bauelemente durch Glas- und /oder Kunststofffasern untereinander verbunden werden. Zusätzlich zu den optischen Fasern sind auch elektrische Leitungen zum Anschluss an die optischen Bauelemente und zum Verbinden der optischen Bauelemente untereinander vorgesehen. Von einer optischen Wellenleiterstruktur, die bspw. auch planare Wellenleiter umfassen kann, ist in dieser Druckschrift an keiner Stelle die Rede.

Der vorliegenden Erfindung liegt die Aufgabe zugrunde, eine optische Wellenleiterstruktur zu schaffen, welche die o.g. Nachteile des Standes der Technik vermeidet und ohne großen Aufwand herzustellen ist. Insbesondere sollte die Wellenleiterstruktur eine geringe optische Dämpfung aufweisen und sowohl Leitungen und Kreuzungen als auch Verzweigungen und Verbindungen aufweisen können.

Zur Lösung dieser Aufgabe schlägt die Erfindung ausgehend von der optischen Wellenleiterstruktur der eingangs genannten Art vor, dass die Wellenleiterstruktur auch Kreuzungen aufweist und die Wellenleiterstruktur im Bereich der Verzweigungen und der Verbindungen als planare Wellenleiter und im Bereich der Kreuzungen als Glas- und/oder Kunststofffasern ausgebildet ist, die sich im Bereich der Kreuzungen überkreuzen.

Überkreuzen ist in der gesamten Anmeldung so zu verstehen, dass sich kreuzende Wellenleiter übereinander verlaufen, so dass ein Übersprechen von einem Wellenleiter in einen kreuzenden Wellenleiter vermieden wird. Durch die vorliegende Erfindung kann eine Dämpfung im Kreuzungsbereich deutlich verringert werden.

Die erfindungsgemäßen optischen Wellenleiterstruktur ist also z.T. mittels der planaren Technologie und z.T. mittels der Multiwire-Technologie hergestellt. Die Kombination aus planaren Wellenleitern und Glas- und/oder Kunststofffasern erlaubt es, die Art des Wellenleiters den gegebenen Anforderungen anzupassen. Unterschiedliche Anforderungen an die Wellenleiter ergeben sich insbesondere im Bereich von Leitungen, Kreuzungen, Verzweigungen und Verbindungen der Wellenleiterstruktur.

Die optische Wellenleiterstruktur hat somit in den Bereichen, in denen Glas- und/oder Kunststofffasern eingesetzt werden, eine relativ geringe optische Dämpfung. In den Bereichen der Wellenleiterstruktur, die aus planaren Wellenleitern bestehen, können problemlos Verzweigungen und Verbindungen ausgebildet werden. Das erlaubt es, die Wellenleiterstruktur großflächig und komplex auszubilden, was den Einsatz auf einer Platine, z. B. einem Motherboard oder einem Board für Backplane-Anwendungen, oder in einer elektronischen Baugruppe eines Rechners besonders interessant macht.

Da die Breite der Gräben im Bereich der Wellenleiter den Kern bilden, sollte die Breite der Gräben der Breite des Kerns der angeschlossenen Glas- und/oder Kunststofffasern (z.B. 62,5 µm oder 100 µm) entsprechend dimensioniert sein, um eine gute Modenübereinstimmung erzielen und Grenzflächenverluste vermeiden zu können. Um eine niedrige Dämpfung erzielen zu können, sollte der Wellenleiter von einem Material mit einem etwas niedrigeren Brechungsindex umgeben sein. Dabei gibt es zwei Möglichkeiten:
- Das Trägermaterial, in dem die Nuten für die Wellenleiter ausgebildet sind, hat die geforderten Eigenschaften (Lichtdurchlässigkeit bei der Wellenlänge des übertragenen Lichts; richtiger Brechungsindex, typischerweise etwa 1% niedriger als der Brechungsindex des Wellenleiterkerns) und die Nuten werden mit einer unteren Cladding-Schicht, der Wellenleiterkernschicht und einer oberen Cladding-Schicht gefüllt.
- Falls das Trägermaterial nicht lichtdurchlässig ist, müssen zunächst der Boden und die Wände der Gräben mit einer Cladding-Schicht überzogen werden, dann wird die Wellenleiterkernschicht in die Gräben gefüllt und schließlich eine obere Cladding-Schicht aufgetragen. Falls die Wellenleiterstruktur keine Verzweigungen umfasst, wäre es auch denkbar, eine Art thermoplastische optische Wellenleiterfaser umfassend den Wellenleiterkern und eine äußere Cladding-Schicht in die Gräben zu pressen.

Gemäß einer bevorzugten Ausführungsform der vorliegenden Erfindung wird vorgeschlagen, dass die Wellenleiterstruktur im Bereich der Leitungen als Glas- und/oder Kunststofffasern ausgebildet ist. Da die Glas- und/oder Kunststofffasern eine relativ kleine Dämpfung aufweisen, können auf diese Weise auch relativ große Entfernung problemlos, d.h. ohne größere Verluste, überwunden werden.

Das Wellenleitermaterial der planaren Wellenleiter ist vorteilhafterweise als ein optisches Polymer ausgebildet. Das Trägermaterial ist vorzugsweise als ein organisches Folienmaterial ausgebildet.

Des weiteren schlägt die Erfindung vor, eine erfindungsgemäße Wellenleiterstruktur in mindestens eine der Lagen einer mehrlagigen optoelektrischen Leiterplatte einzubringen. Vorteilhafterweise sind die elektrischen Schichten der optoelektrischen Leiterplatte über optoelektrische Wandler bzw. elektrooptische Wandler mit der optischen Wellenleiterstruktur gekoppelt.

Als eine weitere Lösung der Aufgabe der vorliegenden Erfindung wird ausgehend von dem Verfahren der eingangs genannten Art vorgeschlagen, dass die Wellenleiterstruktur auch Kreuzungen aufweist, und dass die Glas- und/oder Kunststofffasern im Bereich der Kreuzungen derart in den Gräben angeordnet werden, dass sie sich im Bereich der Kreuzungen überkreuzen, und dass das Wellenleitermaterial im Bereich der Verzweigungen und Verbindungen in die Gräben eingebracht wird.

Das die Gräben begrenzende Material besteht üblicherweise aus dem Trägermaterial der optischen Wellenleiterstruktur. Es ist jedoch auch denkbar, dass die Wandungen der in dem Trägermaterial ausgebildeten Gräben mit einem besonderen Material beschichtet oder ausgekleidet sind, dessen Brechungsindex niedriger als der des Wellenleitermaterials ist.

Gemäß einer bevorzugten Ausführungsform der Erfindung wird vorgeschlagen, dass die Glas- und/oder Kunststofffasern im Bereich der Leitungen in den Gräben angeordnet werden, bevor das Wellenleitermaterial in die Gräben eingebracht wird.

Gemäß einer bevorzugten Weiterbildung der vorliegenden Erfindung wird vorgeschlagen, dass das Trägermaterial als ein organisches Folienmaterial ausgebildet ist, in das die Gräben heißgeprägt werden. Zum Heißprägen wird ein heißer Prägestempel, vorzugsweise ein Metallstempel, eingesetzt, der in die Folie gepresst wird und dort die Gräben erzeugt. Vorteilhafterweise ist das Wellenleitermaterial als ein optisches Polymer ausgebildet, das in einem fließfähigen Zustand in die Gräben eingebracht und dann mittels Ultraviolett (UV)-Strahlung ausgehärtet wird. Alternativ können die planaren Wellenleiter auch aus Dünnglas bestehen, dessen Seitenwände bspw. durch einen Ätzvorgang derart strukturiert sind, dass Lichtstrahlen im Inneren des Wellenleiters an den Seitenwänden totalreflektiert werden. Die Glas- und/oder Kunststofffasern werden vorzugsweise in den Gräben verklebt.

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:
- Figur 1: eine schematische Darstellung einer Platine mit einer erfindungsgemäßen Wellenleiterstruktur gemäß einer bevorzugten Ausführungsform in Draufsicht; und
- Figur 2: die Platine aus Figur 1 im Schnitt.

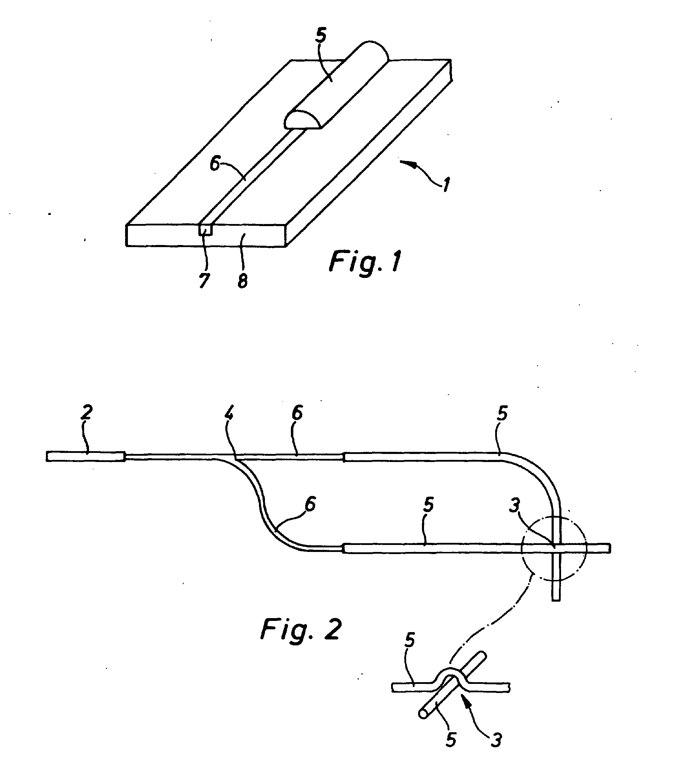

In Figur 1 ist eine Platine 1 mit einer erfindungsgemäßen optischen Wellenleiterstruktur schematisch dargestellt. Die Wellenleiterstruktur ist auf der Platine 1 ausgebildet. Sie umfaßt Leitungen 2, Kreuzungen 3 und Verzweigungen 4 (wenn das Licht den Lichtwellenleiter von links nach rechts durchströmt). Wenn das Licht in der entgegengesetzten Richtung durch den Wellenleiter strömt, ist mit dem Bezugszeichen 4 eine Verbindung bezeichnet.

Im Bereich der Leitungen 2 und der Kreuzungen 3 ist die Lichtwellenleiterstruktur als Glasfaser ausgebildet. Ebenso wäre es denkbar, die Lichtwellenleiterstruktur in diesem Bereich als Kunststofffaser auszubilden. Im Bereich der Verzweigungen/Verbindungen 4 ist die Lichtwellenleiterstruktur dagegen als ein planarer Wellenleiter 6 ausgebildet. Die Glas- und Kunststofffasern 5 haben den Vorteil, dass sie eine geringe optische Dämpfung aufweisen, es im Bereich von Kreuzungen 3 nicht zu einer Streuung oder einem Übersprechen von Licht aus einem ersten Wellenleiter in einen zweiten kreuzenden Wellenleiter kommt und es im Bereich von Kreuzungen 3 nicht zu einer zusätzlichen Dämpfung kommt. Die planaren Wellenleiter 6 haben ihrerseits den Vorteil, dass sie eine äußerst flexible Gestaltung der Wellenleiterstruktur, insbesondere Verzweigungen und/oder Verbindungen 4, ermöglichen. In Kombination miteinander ergeben die Glasfasern 5 und die planaren Wellenleiter 6 eine optimale Lichtwellenleiterstruktur mit einer geringen Dämpfung, keiner Streuung im Bereich der Kreuzungen 3 und einer besonders hohen Flexibilität bzgl. des Verlaufs der Lichtwellenleiterstruktur, insbesondere kann die Lichtwellenstruktur Verzweigungen und Verbindungen 4 umfassen.

Zur Herstellung der optischen Wellenleiterstruktur werden mittels eines Heissprägeverfahrens Gräben 7 in ein Trägermaterial 8 eingebracht. Alternativ wäre es auch denkbar, die Gräben 7 mit Hilfe eines photolithografischen Verfahrens in das Trägermaterial 8 einzubringen. Die Gräben 7 entsprechen dem Verlauf der zukünftigen Wellenleiterstrukur. Das Trägermaterial 8 ist als eine organische Folie ausgebildet. In die Gräben 7 werden zunächst im Bereich der Leitungen 2 und der Kreuzungen 3 die Glasfasern 5 eingebracht und verklebt. Anschließend werden die noch offenen Bereiche der Gräben 7, also im Bereich der Verzweigungen und/oder Verbindungen 4, mit einem Wellenleitermaterial verfüllt, das einen höheren Brechungsindex als das die Gräben 7 begrenzende Material aufweist. In dem vorliegenden Ausführungsbeispiel entspricht das die Gräben 7 begrenzende Material dem Trägermaterial 8. Es ist jedoch denkbar, dass die Wandungen der Gräben 7 mit einem zusätzlichen besonderen Material beschichtet oder ausgekleidet werden. Das Wellenleitermaterial ist als ein optisches Polymer ausgebildet, das in einem fließfähigen Zustand in die Gräben 7 eingebracht und mittels Ultraviolett (UV)-Strahlung ausgehärtet wird.

Es wäre auch denkbar, die planaren Wellenleiter 6 aus Dünnglas herzustellen, das eine Stärke von einigen Mikrometern (z. B. 60 µm) aufweist und dessen Seitenwände durch einen Ätzvorgang derart strukturiert sind, dass Lichtstrahlen im Inneren des Wellenleiters 6 an den Seitenwänden totalreflektiert werden.

Die Abmessungen der Gräben 7 sind so gewählt, dass im Bereich von Leitungen 2 und Kreuzungen 3 die Glasfasern 5 zumindest teilweise aufgenommen werden können. Im Bereich von Verzweigungen und/oder Verbindungen sind die Gräben 7 den Abmessungen der planaren Wellenleiter 6 entsprechend bemessen ausgebildet.

Die fertige Platine 1 kann Teil einer optoelektrischen Leiterplatte sein. Die optoelektrische Leiterplatte wird hergestellt, indem mindestens eine der Metallisierungsebenen einer mehrlagigen elektrischen Leiterplatte durch eine optische Schicht mit der erfindungsgemäßen optischen Wellenleiterstruktur ersetzt wird. Die elektrischen Schichten der optoelektrischen Leiterplatte sind über optoelektrische bzw. elektrooptische Wandler mit der Wellenleiterstruktur gekoppelt. Die optoelektrische Leiterplatte ist bpsw. ein Board (z.B. Motherboard) oder eine Baugruppe eines Rechners.

Die erfindungsgemäße Platine 1 eignet sich insbesondere zum Einsatz bei sogenannten Backplane-Anwendungen, wo relativ große Entfernungen überbrückt werden müssen.

## Patentansprüche

1. Optische Wellenleiterstruktur, die Leitungen (2), Verzweigungen und/oder Verbindungen (4) umfasst, umfassend planare Wellenleiter (6), die aus einem Wellenleitermaterial bestehen, das in Gräben (7) eingebracht ist, die in einem Trägermaterial (8) ausgebildet sind, wobei das Wellenleitermaterial einen höheren Brechungsindex als das die Gräben (7) begrenzende Material hat, wobei die Wellenleiterstruktur neben den planaren Wellenleitern (6) auch Glas- und/oder Kunststofffasern (5) umfasst, wobei sowohl die planaren Wellenleiter (6) als auch die Glas- und/oder Kunststofffasern (5) zum Anschluss und zum Verbinden von Halbleiterbauelementen auf einer Platine (1) ausgebildet sind, **dadurch gekennzeichnet, dass** die Wellenleiterstruktur auch Kreuzungen (3) aufweist und im Bereich der Verzweigungen und der Verbindungen (4) als planare Wellenleiter (6) und im Bereich der Kreuzungen (3) als Glas- und/oder Kunststofffasern (5) ausgebildet ist, die sich im Bereich der Kreuzungen (3) überkreuzen.

2. Wellenleiterstruktur nach Anspruch 1, **dadurch gekennzeichnet, dass** die Wellenleiterstruktur im Bereich der Leitungen (2) als Glas- und/oder Kunststofffasern (5) ausgebildet ist.

3. Wellenleiterstruktur nach Anspruch 1 oder 2, **dadurch gekennzeichnet, dass** das Wellenleitermaterial als ein optisches Polymer ausgebildet ist.

4. Wellenleiterstruktur nach einem der Ansprüche 1 bis 3, **dadurch gekennzeichnet, dass** das Trägermaterial (8) als ein organisches Folienmaterial ausgebildet ist.

5. Mehrlagige optoelektrische Leiterplatte, **dadurch gekennzeichnet, dass** in mindestens einer der Lagen eine Schicht mit einer optischen Wellenleiterstruktur umfassend sowohl planare Wellenleiter (6) als auch Glas- und/oder Kunststofffasern (5), nach einem der Ansprüche 1 bis 4 eingebracht ist.

6. Leiterplatte nach Anspruch 5, **dadurch gekennzeichnet, dass** die elektrischen Schichten der Leiterplatte über optoelektrische Wandler bzw. elektrooptische Wandler mit der optischen Wellenleiterstruktur gekoppelt sind.

7. Verfahren zur Herstellung einer auf einer Platine (1) ausgebildeten optischen Wellenleiterstruktur, die Leitungen (2), Verzweigungen (4) und/oder Verbindungen (4) umfasst, bei dem in ein Trägermaterial (8) dem Verlauf der Wellenleiterstruktur entsprechende Gräben (7) eingebracht werden, in einem Teil der Gräben (7) Glas- und/oder Kunststofffasern (5) angeordnet werden und in den restlichen Gräben (7) dann ein Wellenleitermaterial (6) eingebracht wird, wobei das Wellenleitermaterial (6) einen höheren Brechungsindex als das die Gräben (7) begrenzende Material aufweist, **dadurch gekennzeichnet, dass** die Wellenleiterstruktur auch Kreuzungen (3) aufweist, und dass die Glas- und/oder Kunststofffasern (5) im Bereich der Kreuzungen (3) derart in den Gräben (7) angeordnet werden, dass sie sich im Bereich der Kreuzungen (3) überkreuzen, und dass das Wellenleitermaterial im Bereich der Verzweigungen (4) und Verbindungen (4) in die Gräben (7) eingebracht wird.

8. Verfahren nach Anspruch 7, **dadurch gekennzeichnet, dass** die Glas- und/oder Kunststofffasern (5) im Bereich der Leitungen (2) in den Gräben (7) angeordnet werden, bevor das Wellenleitermaterial (6) in die Gräben (7) eingebracht wird.

9. Verfahren nach Anspruch 7 oder 8, **dadurch gekennzeichnet, dass** das Trägermaterial (8) als ein organisches Folienmaterial ausgebildet ist, in das die Gräben (7) heißgeprägt werden.

10. Verfahren nach einem der Ansprüche 7 bis 9, **dadurch gekennzeichnet, dass** das Wellenleitermaterial (6) als ein optisches Polymer ausgebildet ist, das in einem fließfähigen Zustand in die Gräben (7) eingebracht und mittels Ultraviolett (UV)-Strahlung ausgehärtet wird.

11. Verfahren nach einem der Ansprüche 7 bis 10, **dadurch gekennzeichnet, dass** die Glas- und/oder Kunststofffasern (5) in den Gräben (7) verklebt werden.

## Claims

1. Optical wave conductor structure, comprising leads (2), branching points and/or connections (4), comprising planar wave conductors (6) consisting of a wave conductor material accommodated in moats (7) shaped in a carrier material (8), wherein the wave conductor structure has a higher refractive index than that of the material adjoining the moats (7), wherein in addition to the planar wave conductors (6) the wave conductor structure also comprises glass and/or plastic fibres (5), wherein both the planar wave conductors (6) and the glass and/or plastic fibres (5) are designed for connection to and interconnection among semiconductor components on a printed circuit board (1), **characterised in that** the wave conductor structure also has junctions (3), and is structured as planar wave conductors (6) in the branching areas and interconnections (4), and as glass and/or plastic fibres (5) in the junction areas (3), crossing in the junction areas (3).

2. Optical wave conductor structure according to Claim 1, **characterised in that** the wave conductor structure is structured as glass and/or plastic fibres (5) in the area of the leads (2).

3. Wave conductor structure according to Claims 1 and 2, **characterised in that** the wave conductor material is structured as an optical polymer.

4. Wave conductor structure according to Claims 1 to 3, **characterised in that** the carrier material (8) is structured as an organic foil material.

5. Multilayer opto-electrical printed circuit board, **characterised in that** in at least one of the layers is a layer with an optical wave conductor structure comprising both planar wave conductors (6) and glass and/or plastic fibres (5), accommodated in accordance with one of Claims 1 to 4.

6. Printed circuit boards according to Claim 5, **characterised in that** the electrical layers of the printed circuit board are coupled to the optical wave conductor structure via opto-electrical converters and/or electrical optical converters.

7. Process for the production of an optical wave conductor structure implemented on a printed circuit board (1) comprising leads (2), branch points (4) and/or connections (4), wherein moats (7) corresponding to the path of the wave conductor structure are accommodated into a carrier material (8), glass and/or plastic fibres (5) are arranged in part of the moats (7) and a wave conductor material (6) is then accommodated in the remaining moats (7), wherein the wave conductor material (6) has a higher refractive index than that of the material delimiting the moats (7), **characterised in that** the wave conductor structure also has junctions (3), and that in the area of the junctions (3) the glass and/or plastic fibres (5) are arranged in the moats (7) in a manner such that they cross in the area of the junctions (3), and that the wave conductor material is accommodated in the moats (7) in the area of the branching points (4) and connections (4).

8. Process according to Claim 7, **characterised in that** the glass and/or plastic fibres (5) are arranged in the moats (7) in the area of the leads (2) before the wave conductor material (6) is introduced in the moats (7).

9. Process according to Claims 7 or 8, **characterised in that** the carrier material (8) is structured as an organic foil material into which the moats (7) are hot embossed.

10. Process according to one of Claims 7 to 9, **characterised in that** the wave conductor material (6) is structured as an optical polymer introduced into the moats (7) in a free-flowing condition and hardened by means of UV radiation.

11. Process according to one of Claims 7 to 10, **characterised in that** the glass and/or plastic fibres (5) are glued into the moats (7).

## Revendications

1. Structure de guide d'ondes optique, qui comprend des conduits (2), des embranchements et/ou des liaisons (4), comprenant des guides planaires (6), qui comportent un matériau constituant le guide d'ondes, qui est placé dans des rigoles (7), qui sont réalisées dans un substrat (8), selon laquelle le matériau constituant le guide d'ondes possède un indice de réfraction plus élevé que le matériau délimitant les rigoles (7), selon laquelle la structure de guide d'ondes comprend non seulement des guides d'ondes planaires (6) mais également des fibres de verre et/ou des fibres en matière plastique (5), selon laquelle aussi bien les guides d'onde planaires (6) que les fibres de verre et/ou les fibres en matière plastique (5) pour raccorder et relier les composants semi-conducteurs sont réalisés sur une platine (1), **caractérisée en ce que** la structure de guide d'ondes présente également des croisements (3) et est réalisée au niveau des embranchements et des liaisons (4) sous la forme de guides d'ondes planaires (6) et au niveau des croisements (3) sous la forme de fibres de verre et/ou de fibres en matière plastique (5), qui se croisent au niveau des croisements (3).

2. Structure de guide d'ondes selon la revendication 1, **caractérisée en ce que** la structure de guide d'ondes est réalisée au niveau des conduits (2) sous la forme de fibres de verre et/ou de fibres en matière plastique (5).

3. Structure de guide d'ondes selon la revendication 1 ou 2, **caractérisée en ce que** le matériau constituant le guide d'ondes est réalisé sous la forme d'un polymère optique.

4. Structure de guide d'ondes selon l'une quelconque des revendications 1 à 3, **caractérisée en ce que** le substrat (8) est réalisé sous la forme d'un matériau en film organique.

5. Plaque conductrice opto-électrique constituée de plusieurs couches, **caractérisée en ce qu'**une couche avec une structure d'ondes optique comprenant aussi bien des guides d'ondes planaires (6) que des fibres de verre et/ou des fibres en matière plastique (5), selon l'une quelconque des revendications 1 à 4, est placée dans au moins une des positions.

6. Plaque conductrice selon la revendication 5, **caractérisée en ce que** les couches électriques de la plaque conductrice sont couplées à la structure de guide d'ondes optique par l'intermédiaire de transducteurs opto-électriques ou de transducteurs électro-optiques.

7. Procédé de fabrication d'une structure de guide d'ondes optique réalisée sur une platine (1), qui comprend des conduits (2), des embranchements (4) et/ou des liaisons (4), selon lequel des rigoles (7) correspondant au tracé de la structure de guide d'ondes sont placées dans un substrat (8), des fibres de verre et/ou des fibres en matière plastique (5) sont agencées dans une partie des rigoles (7) et un matériau constituant le guide d'ondes (6) est ensuite placé dans les rigoles (7) restantes, le matériau constituant le guide d'ondes (6) présentant un indice de réfraction plus élevé que le matériau délimitant les rigoles (7), **caractérisé en ce que** la structure de guide d'ondes présente également des croisements (3), et **en ce que** les fibres de verre et/ou les fibres en matière plastique (5) sont agencées dans les rigoles (7) au niveau des croisements (3) de telle manière qu'elles se croisent au niveau des croisements (3), et **en ce que** le matériau constituant le guide d'ondes est placé dans les rigoles (7) au niveau des embranchements (4) et des liaisons (4).

8. Procédé selon la revendication 7, **caractérisé en ce que** les fibres en matière plastique et/ou les fibres de verre (5) sont agencées dans les rigoles (7) au niveau des conduits (2), avant que le matériau constituant le guide d'ondes (6) ne soit placé dans les rigoles (7).

9. Procédé selon la revendication 7 ou 8, **caractérisé en ce que** le substrat (8) est réalisé sous la forme d'un matériau en film organique, dans lequel les rigoles (7) sont estampées à chaud.

10. Procédé selon l'une quelconque des revendications 7 à 9, **caractérisé en ce que** le matériau constituant le guide d'ondes (6) est réalisé sous la forme d'un polymère optique qui est placé dans les rigoles (7) dans un état liquide et durci à l'aide d'un rayonnement ultraviolet (UV).

11. Procédé selon l'une quelconque des revendications 7 à 10, **caractérisé en ce que** les fibres de verre et/ou les fibres en matière plastique (5) sont collées dans les rigoles (7).
